# EUROPÄISCHE PATENTSCHRIFT

(11) **EP 2 834 200 B1**
(45) Veröffentlichungstag und Bekanntmachung des Hinweises auf die Patenterteilung: **18.01.2017**
(21) Anmeldenummer: 13712545.6
(22) Anmeldetag: 26.03.2013
(51) Int. Cl.: C03B 20/00, C03B 5/033, C03B 19/10

(54) **VERFAHREN ZUR HERSTELLUNG EINES FORMKÖRPERS AUS ELEKTROGESCHMOLZENEM SYNTHETISCHEM QUARZGLAS**
METHOD FOR THE PRODUCTION OF A MOLD BODY FROM AN ELECTRICALLY MELTED SYNTHETIC QUARTZ GLASS
PROCÉDÉ DE FABRICATION D'UN CORPS MOULÉ EN VERRE DE SILICE SYNTHÉTIQUE ÉLECTROFONDU

(30) Priorität: 05.04.2012 DE 102012006914; 25.04.2012 DE 102012008123
(43) Veröffentlichungstag der Anmeldung: 11.02.2015
(73) Patentinhaber: Heraeus Quarzglas GmbH & Co. KG, 63450 Hanau (DE)
(72) Erfinder: LEHMANN, Walter, 04155 Leipzig (DE); KAYSER, Thomas, 04105 Leipzig (DE); ARNDT, Martin, Newcastle Tyne and Wear NE3 5RB (GB); HOFMANN, Achim, 60599 Frankfurt am Main (DE)
(74) Vertreter: Staudt, Armin Walter
(86) Internationale Anmeldenummer: PCT/EP2013/056364
(87) Internationale Veröffentlichungsnummer: WO 2013/149882

(56) Entgegenhaltungen:
- EP-A1- 1 314 701
- DE-A1-102005 045 051
- DE-A1-102010 021 693
- DE-B3-102004 038 602
- US-A- 2 038 627
- US-B1- 6 739 155

## Beschreibung

### Technisches Gebiet

Die vorliegende Erfindung betrifft ein Verfahren zur Herstellung eines Formkörpers aus elektrogeschmolzenem synthetischem Quarzglas, indem synthetisch erzeugte Quarzglaskörnung bereitgestellt und in einem elektrisch beheizten Schmelzbehälter unter Bildung einer erweichten Quarzglasmasse erhitzt und die erweichte Quarzglasmasse zu dem Formkörper geformt wird.

Synthetisch erzeugte Quarzglaskörnung wird durch thermisches Verdichten eines porösen SiO₂-Granulats erhalten. Derartiges Granulat wird durch Vorverdichtung von SiO₂-Sootstaub oder SiO₂-Nanoteilchen erzeugt, wie sie beispielsweise bei der Herstellung von synthetischem Quarzglas durch Polymerisation, Polykondensation, Fällung oder CVD-Abscheideverfahren anfallen. Als Beispiele für übliche Granulierungsverfahren seien Rollgranulation, Sprühgranulation, Zentrifugalzerstäubung, Wirbelschichtgranulation, Granulierverfahren unter Einsatz einer Granuliermühle, Kompaktierung, Walzenpressen, Brikettierung, Schülpenherstellung oder Extrudierung genannt.

Die dabei anfallenden diskreten, mechanisch und gegebenenfalls auch thermisch vorverdichteten Partikel werden hier als "SiO₂-Granulatteilchen" bezeichnet. In ihrer Gesamtheit bilden sie das poröse "SiO₂-Granulat".

Wegen ihrer Porosität ist das direkte Einschmelzen derartiger SiO₂-Granulate problematisch. Denn beim direkten Einschmelzen besteht die Gefahr, dass sich geschlossene, gasgefüllte Hohlräume bilden, die aus der hochviskosen Quarzglasmasse nicht oder nur sehr langsam zu entfernen sind und die so zu Blasen im Quarzglas führen. Deshalb ist für anspruchsvolle Anwendungen, bei denen es auf Blasenfreiheit des Endproduktes ankommt, in der Regel ein vorheriges Verglasen des porösen Granulats notwendig. Die durch Verglasen der porösen SiO₂-Granulatteilchen erhaltenen, dichten Glasteilchen werden hier als "Quarzglasteilchen" bezeichnet, die in ihrer Gesamtheit die synthetische "Quarzglaskörnung" bilden.

Derartige Quarzglaskörnung kann in elektrisch beheizten Schmelztiegeln oder Schmelzformen zu Bauteilen, wie Rohren, Stäben, Haltern, Glocken, Reaktoren oder Tiegeln für die Halbleiter- oder Lampenfertigung und der chemischen Verfahrenstechnik aus hochkieselsäurehaltigem Glas verarbeitet werden.

Unter "hochkieselsäurehaltigem Glas" wird hierbei nicht dotiertes oder dotiertes Quarzglas mit einem SiO₂-Gehalt von mindestens 90 Gew.-% verstanden. Ein derartiges Glas wird im Folgenden der Einfachheit halber auch kurz als "Quarzglas" und die erweichte Masse daraus als "Quarzglasschmelze" bezeichnet.

Die Quarzglasschmelze weist selbst bei Temperaturen nahe der Sublimationstemperatur von SiO₂ noch eine vergleichsweise hohe Viskosität auf. Infolge ihrer hohen Temperatur und Viskosität können Quarzglasschmelzen nicht ohne weiteres mittels bei der Glasbearbeitung ansonsten üblichen Maßnahmen, wie Läutern oder Rühren, homogenisiert werden.

Beim Einschmelzen von Quarzglaskörnung bewirkt daher auch der Gasraum zwischen den dichten Quarzglasteilchen eine zusätzliche Blasenproblematik. Denn die beim Einschmelzprozess innerhalb der viskosen Glasmasse eingeschlossenen Gase können nachträglich kaum noch entweichen und auch nicht durch Homogenisierungsmaßnahmen entfernt werden. Sie verursachen Blasen und andere Störungen im fertigen Quarzglas-Formkörper.

Das Problem der Blasenbildung stellt sich insbesondere bei Einschmelzprozessen mit prozessbedingt beschränkter Einschmelzdauer, wie etwa beim kontinuierlichen Einschmelzen von Quarzglaskörnung in einem Schmelztiegel-Ziehverfahren. Bei diesem Verfahren wird einem Schmelztiegel von oben Quarzglaskörnung zugeführt, die dabei erzeugte Körnungs-Schüttung wird erhitzt und zu einer hochviskosen Quarzglasschmelze erschmolzen und diese wird kontinuierlich über eine Ziehdüse am Tiegelboden als Quarzglasstrang mit beliebigem Querschnittsprofil abgezogen. Aus dem Quarzglasstrang werden zylinderförmige Formkörper abgelängt.

Beim Schmelztiegel-Ziehverfahren können in die viskose Quarzglasschmelze eingeschlossene Gase kaum noch entfernt werden. Sie verursachen Blasen und andere Störungen im abgezogenen Quarzglasstrang und sie können zu Unstetigkeiten beim Ziehprozess und damit zu Maßabweichungen führen.

### Stand der Technik

Aus den obigen Erläuterungen ergibt sich, dass die Problematik des Blaseneinschlusses sowohl beim Verglasen des porösen SiO₂-Granulats zu synthetischer Quarzglaskörnung als auch beim Einschmelzen der so erzeugten Quarzglaskörnung zu dem Quarzglas-Formkörper eine wichtige Rolle spielt. Mit dem Ziel, Blasenfreiheit oder Blasenarmut im jeweiligen Prozessstadium zu erreichen, ist eine Vielzahl unterschiedlicher Techniken bekannt.

### Verlassen von Granulat zu Quarzglaskörnung

So wird in der EP 1 076 043 vorgeschlagen, poröses SiO₂-Granulat in eine Brennerflamme einzurieseln, um es darin fein zu verteilen und bei Temperaturen von 2000 bis 2500 °C zu verglasen. Das Granulat wird vorzugsweise durch Sprüh-oder Nassgranulation von Filterstaub erhalten und hat Korngrößen im Bereich von 5 bis 300 µm. Vor dem Verglasen kann es durch Behandlung mit Mikrowellenstrahlung erhitzt und vorverdichtet werden.

Der Sintergrad eines gegebenen Granulatteilchens hängt von seiner Teilchengröße und dem Wärmeeintrag ab, der wiederum von der Aufenthaltsdauer in der Brennerflamme und der Flammentemperatur bestimmt wird. Das Granulat hat jedoch in der Regel eine gewisse Teilchengrößenverteilung, und die Brenngasflamme hat Bereiche unterschiedlicher Strömungsgeschwindigkeiten und Flammentemperaturen. Dies führt zu ungleichmäßigen und wenig reproduzierbaren Sintergraden. Es besteht außerdem die Gefahr, dass die Quarzglasteilchen durch die Brenngase verunreinigt werden. In dem Zusammenhang ist besonders die Beladung mit Hydroxylgruppen bei Einsatz wasserstoffhaltiger Brenngase zu nennen, was mit einer vergleichsweise niedrigen Viskosität des Quarzglases einhergeht.

In der EP 1 088 789 A2 wird zum Verglasen von porösem SiO₂-Granulat vorgeschlagen, das synthetisch erzeugte Granulat zunächst durch Erhitzen in HCl-haltiger Atmosphäre in einem Drehrohrofen zu reinigen, anschließend in einem Fließbett zu kalzinieren und dann in einer vertikalen Fließbettapparatur oder in einem Tiegel unter Vakuum oder Helium oder Wasserstoff zu synthetischer Quarzglaskörnung zu verglasen.

Hierbei handelt es sich um ein diskontinuierliches Verglasungsverfahren, einhergehend mit einer großen thermischen Trägheit des Ofens und demzufolge langen Prozessdauern mit dementsprechend hohem Zeit- und Kostenaufwand mit geringem Durchsatz und einem im Ergebnis relativ teueren Granulat.

Bei einem ähnlichen Verfahren gemäß der JP 10287416 A wird partikelförmiges SiO₂-Gel mit Durchmessern im Bereich von 10 und 1.000 µm kontinuierlich einem Drehrohrofen verdichtet. Dieser umfasst ein Drehrohr aus Quarzglas mit einer Länge von 2 m und einem Innendurchmesser von 200 mm. Das Drehrohr wird mittels Heizern von außen beheizt und ist in mehrere Temperaturzonen aufgeteilt, die den Temperaturbereich von 50 °C bis 1.100 °C abdecken. Das partikelförmige SiO₂-Gel mit Partikelgrößen zwischen 100 und 500 µm wird in dem mit 8 U/min rotierenden Drehrohr durch Zufuhr eines sauerstoffhaltigen Gases von organischen Bestandteilen befreit und zu SiO₂-Pulver gesintert. Die Ofenatmosphäre beim Sintern enthält Sauerstoff und fakultativ Argon, Stickstoff oder Helium.

Das danach erhaltene SiO₂-Pulver enthält jedoch noch Silanolgruppen in hoher Konzentration von nicht weniger als 1.000 Gew.-ppm. Zu deren Beseitigung wird das SiO₂-Pulver abschließend bei einer höheren Temperatur von 1.300 °C in einem Quarzglastiegel mit einem Innendurchmesser von 550 mm in Chargen von 130 kg kalziniert und dicht gesintert.

Die thermische Stabilität eines Drehrohres aus Quarzglas beschränkt dessen Einsatz bei hoher Temperatur zum Verglasen der Granulatteilchen. Beim Verglasen im Quarzglastiegel kann es jedoch zu Verbackungen der sinternden Granulatteilchen kommen, die zu einer undefinierten, porenhaltigen Quarzglasmasse führen.

Auch die WO 88/03914 A1 lehrt die Reduktion der BET-Oberfläche eines amorphen, porösen SiO₂-Pulvers unter Einsatz eines Drehrohrofens in einer Helium und/oder Wasserstoff enthaltender Atmosphäre. Bei einer ersten Verfahrensweise wird feiner SiO₂-Sootstaub in einen Drehrohrofen gegeben, unter Luft auf 1200 °C aufgeheizt und bei dieser Temperatur 1 h lang gehalten. Ergebnis dieses Prozesses soll ein rieselfähiges, sphärisches Granulat mit Korngrößen von 0,1 bis 5 mm und einer BET-Oberfläche < 1 m²/g sein. Sootstaub ist jedoch nicht rieselfähig, extrem sinteraktiv und er kann leicht verblasen werden. Die Verarbeitung von Sootstaub in einem Drehrohrofen gestaltet sich daher äußerst problematisch. Bei einer Abwandlung dieser Verfahrensweise wird vorgeschlagen, SiO₂-Sootstaub mit Wasser zu vermischen, so dass eine feuchte krümelige Masse erhalten wird. Diese Masse wird in einen Drehrohrofen gegeben und bei einer Temperatur von 600 °C zu einem Pulver mit Korngrößen von 0,1 bis 3 mm verdichtet. Das so vorverdichtete SiO₂-Pulver wird anschließend in einem separaten Ofen verglast.

Aus der DE 10 2004 038 602 B3 ist ein Verfahren zur Herstellung von elektrogeschmolzenem, synthetischem Quarzglas für den Einsatz in der Lampen- und Halbleiterfertigung bekannt. Als Ausgangsmaterial für das elektrogeschmolzene Quarzglas wird thermisch verdichtetes SiO₂-Granulat eingesetzt. Das Granulat wird durch Granulation einer wässrigen Suspension aus amorphen, nanoskaligen, durch Flammenhydrolyse von SiCl₄ erzeugten pyrogenen SiO₂-Partikeln gebildet.

Zwecks Viskositätserhöhung wird das SiO₂-Granulat mit Al₂O₃ dotiert, indem der Suspension Nanopartikel aus pyrogen hergestelltem Al₂O₃ oder ein lösliches Aluminiumsalz beigefügt wird.

Es werden rundliche Granulat-Körner mit Außendurchmessern im Bereich zwischen 160 µm und 1000 µm erhalten. Das Granulat wird bei ca. 400 °C im Drehrohrofen getrocknet und bei einer Temperatur von etwa 1420 °C bis auf eine BET-Oberfläche von ca. 3 m²/g verdichtet.

Zum vollständigen Verglasen werden die Einzelkörner des Granulats anschließend unter verschiedenen Atmosphären, wie Helium, Wasserstoff oder Vakuum vollständig verglast. Das Heizprofil beim Verglasen der Granulate umfasst jeweils ein Aufheizen auf 1400 °C mit einer Aufheizrate von 5°C/min und eine Haltezeit von 120 min. Nach dieser Behandlung sind die einzelnen Granulatkörner in sich verglast. Die Körner liegen einzeln vor, ohne zu einer Masse verschmolzen zu sein.

Das Granulat wird in einem Elektroschmelzprozess zu Quarzglas weiterverarbeitet, wie beispielsweise in einem Tiegel zu einem Formkörper erschmolzen oder in einem Tiegelziehverfahren kontinuierlich zu einem Strang gezogen.

Auch hier erfolgt das Verglasen in einem separaten Ofen, so dass es sich um ein diskontinuierliches Verfahren mit mehreren, kostenintensiven Aufheizprozessen. Die US 4,225,443 A beschreibt den Einsatz eines Drehrohrofens zur Herstellung von Glaspartikeln für Filterzwecke. Fein gemahlenes Glaspulver mit Partikelgrößen um 100 µm wird mit Wasser und Bindemittel vermischt und zu Granulat-Partikeln mit Partikelgrößen um 300 µm - 4,5 mm verarbeitet. Diese Partikel werden in einem Drehrohrofen mit einem Drehrohr aus Mullit zu im Wesentlichen sphärischen Pellets mit Größen um 500 - 4000 µm gesintert.

Die EP-A-1314701 beschreibt die Wärmebehandlung eines mittels Sol-Gel Verfahren hergestellten Siliziumdioxidpulvers unter Vakuum und in einer Atmosphäre von Helium. Blasenarme Quarzglasprodukte werden danach hergestellt.

### Einschmelzen der Quarzglaskörnung zur Erzeugung eines Quarzglas-Formkörpers

Um dem Einschluss von Gasen bei einem Schmelztiegel-Ziehverfahren entgegen zu wirken, wird in der DE-OS 25 50 929 vorgeschlagen, im Innenraum des Schmelztiegels eine Atmosphäre aus Helium und Wasserstoff aufrecht zu erhalten. Diese beiden Gase diffundieren Quarzglas vergleichsweise schnell. Sie können andere, langsamer diffundierende Gase vorab aus vorhandenen Hohlräumen der Körnungs-Schüttung verdrängen und sind in der Lage, auch in der prozesstypisch kurzen Zeit des Schmelztiegel-Ziehverfahrens aus der viskosen Quarzglasschmelze zu entweichen. Wasserstoff kann sich darüber hinaus in Quarzglas unter Bildung von Hydroxylgruppen lösen. Dadurch können sowohl die Blasenbildung als auch das Blasenwachstum vermindert werden.

Es hat sich jedoch gezeigt, dass es trotz dieser Maßnahme zu Blasenbildung im Quarzglas-Formkörper kommen kann. Dies kann darauf zurückgeführt werden, dass sich bei Zufuhr der Gase Helium oder Wasserstoff bevorzugte Strömungskanäle in der Schüttung des Granulats ausbilden, die lokal zu einer relativ hohen Gaskonzentration führen und an anderer Stelle der Schüttung für einen hinreichenden Austausch der vorhandenen Gase durch Helium oder Wasserstoff fehlen. Sowohl die lokal überhöhte Gaskonzentration als auch ein lokal unzureichender Gasaustausch können zur Blasenbildung beitragen.

### Technische Aufgabenstellung

Der Erfindung liegt die Aufgabe zugrunde, ein Verfahren anzugeben, das ausgehend von porösem SiO₂-Granulat die Herstellung dichter, synthetischer Quarzglaskörnung ermöglicht, die beim Einsatz in einem Elektroschmelzprozess ein vorteilhaftes Einschmelzverhalten zeigt, und dadurch die reproduzierbare Herstellung möglichst blasenfreier Quarzglas-Formkörper ermöglicht, und zwar insbesondere auch bei kontinuierlichen Einschmelzprozessen.

### Allgemeine Beschreibung der Erfindung

Diese Aufgabe wird ausgehend von einem Verfahren der eingangs genannten Gattung erfindungsgemäß durch ein Verfahren gelöst, dass synthetisch erzeugte Quarzglaskörnung aus Körnungsteilchen eingesetzt wird, in denen Helium eingeschlossen ist und deren Bereitstellung folgende Verfahrensschritte umfasst:
(a) Granulation pyrogen hergestellter Kieselsäure unter Bildung eines SiO₂-Granulats aus porösen Granulatteilchen, und
(b) Verglasen des SiO₂-Granulats in einem Drehrohrofen mit einem mindestens teilweise aus keramischem Werkstoff bestehenden Drehrohr und unter einem Behandlungsgas, das mindestens 30 Vol.-% Helium enthält, unter Bildung der Körnungsteilchen mit eingeschlossenem Helium, und
(c) Abkühlen der verglasten Körnungsteilchen derart, dass das in den Körnungsteilchen eingeschlossene Helium ein Volumen von mindestens 0,5 cm³/kg einnimmt.

Beim erfindungsgemäßen Verfahren wird bereits beim Verglasen des porösen SiO₂-Granulats zu dichter, heliumhaltiger Quarzglaskörnung eine wesentliche Voraussetzung für dessen vorteilhafte Weiterverarbeitung durch Einschmelzen zu einem weitgehend blasenfreien Formkörper geschaffen.

Das SiO₂-Granulat wird erhalten, indem pyrogen hergestellte Kieselsäure - im Folgenden auch als "SiO₂-Sootstaub" bezeichnet - anhand üblicher Granulierverfahren vorverdichtet wird. Die Granulierung kann unter Einsatz eines Drehrohres erfolgen, wie aus dem Stand der Technik bekannt. Ergebnis ist in jedem Fall ein poröses SiO₂-Granulat. Dieses wird in einem Drehrohrofen mit einem um eine Mittelachse rotierenden, beheizten Drehrohr verglast, das in Längsrichtung des Ofens leicht geneigt ist, um den Transport des Granulats von seiner Einlaufseite zur Auslaufseite herbeizuführen. Dabei ergeben sich wegen der hohen Temperatur und der damit verbundenen Materialbelastung besondere Anforderungen, die im Folgenden näher erläutert werden.

Über die Länge des Drehrohres gesehen wird beim Verglasen ein Temperaturprofil mit einem Temperaturmaximum erzeugt, das höher liegt als die Erweichungstemperatur von Quarzglas, also oberhalb von 1150 °C. Um dies ohne Verformung des Drehrohres zu ermöglichen, besteht mindestens der thermisch am höchsten belastete Bereich des Drehrohres aus einer temperaturfesten Keramik mit höherer Erweichungstemperatur als undotiertes Quarzglas.

Das Drehrohr ist einteilig oder es besteht aus mehreren Teilen, wobei die Drehrohr-Wandung mindestens über diejenige Teillänge, die der maximalen Temperaturbelastung ausgesetzt ist, aus der temperaturfesten Keramik besteht. Das Drehrohr kann eine Innenauskleidung aufweisen. Abgesehen von einer etwaigen metallischen Einfassung besteht das Drehrohr im einfachsten Fall vollständig aus der Keramik.

Die Granulatteilchen werden in dem Drehrohr auf eine Temperatur erhitzt, die zum Verglasen genügt. Die daraus nach dem Verglasen erhaltenen Quarzglasteilchen haben eine spezifische Oberfläche von weniger als 1 m²/g; ermittelt nach DIN ISO 9277- Mai 2003; "Bestimmung der spezifischen Oberfläche von Feststoffen durch Gasadsorption nach dem BET-Verfahren"). Die Oberfläche ist dicht, wobei die Teilchen transparent oder teilweise opak sein können.

Damit das Verglasen der Schüttung aus porösem SiO₂-Granulat im Drehrohr überhaupt gelingt, ist weitere Voraussetzung eine Atmosphäre, die Helium enthält. Nur eine ausreichend Helium enthaltende Atmosphäre ermöglicht ein blasenfreies oder besonders blasenarmes Verglasen der porösen Granulatteilchen bei niedriger Temperatur und/oder kurzen Verglasungdauern, wie sie unter den Bedingungen des Drehrohrofen-Verglasens möglich sind. Gegebenenfalls eingeschlossene Gase bestehen zum großen Teil (beispielsweise mindestens 90 Vol.-%) aus Helium. Anstelle von Helium wäre auch Wasserstoff für ein blasenarmes Verglasen grundsätzlich geeignet; allerdings führt eine Beladung der verglasten Quarzglasteilchen mit Wasserstoff nicht in dem Maße beim späteren Einschmelzen der Körnung zum Ausgasen und zur lokalen Verbesserung der Wärmeleitung wie dies bei der Heliumbeladung der Fall ist. Anteile von Wasserstoff in der Verglasungs-Atmosphäre sind aber unschädlich.

Gemäß der Erfindung ist daher vorgesehen, dass das Drehrohr beim Verglasen entweder mit einem Behandlungsgas geflutet ist oder dass es mit diesem Behandlungsgas kontinuierlich oder von Zeit zu Zeit gespült wird, wobei das Behandlungsgas zu mindestens 30 Vol.-% aus Helium besteht und gleichzeitig möglichst wenig - im Idealfall keinen - Stickstoff enthält. Denn es hat sich gezeigt, dass in Gegenwart von Stickstoff verglaste Granulatteilchen zu einem höheren Blasengehalt neigen.

Beim Durchwandern des Drehrohres sind die Granulatteilchen mechanischen Kräften ausgesetzt, die durch das Gewicht und die Umwälzung der Schüttung erzeugt werden. Etwaige Agglomerate der verglasten Körnung werden dabei wieder aufgelöst.

Das Verglasen im Drehrohrofen umfasst einen Durchlauf oder mehrere Durchläufe. Im Fall mehrerer Durchläufe kann die Temperatur von Durchlauf zu Durchlauf erhöht werden. Bei mehreren Durchläufen wird eine geringere Blasigkeit der Quarzglaskörnung erzielt.

Die verglaste Quarzglaskörnung kann unmittelbar zur Herstellung von Quarzglasformteilen eingeschmolzen werden. Es hat sich jedoch gezeigt, dass je nach Einschmelztechnik und bei sehr hohen Anforderungen an die Blasenfreiheit der Quarzglasformteile die oben erläuterten Verglasungsmaßnahmen im Drehrohrofen allein nicht ausreichen, auch wenn die resultierende Körnung augenscheinlich vollständig transparent erscheint. Denn wird die Quarzglaskörnung in Elektroschmelzverfahren als Schüttung weiterverarbeitet, macht sich nicht nur ein etwaiger Gasgehalt der Körnung selbst blasenbildend bemerkbar, sondern auch Gase zwischen den Quarzglasteilchen der Schüttung. Üblicherweise wird versucht, diese Gase durch ein Spülen mit Helium auszutreiben, was jedoch durch die Ausbildung von bevorzugten Gasströmungskanälen mit den oben erläuterten Nachteilen einer inhomogenen Beaufschlagung mit Helium einhergeht.

Die Erfindung geht daher einen anderen Weg. Die für Elektroschmelzverfahren vorgesehene Quarzglaskörnung wird im Drehrohr so verglast, dass sie einen gewissen Heliumgehalt auch nach dem Abkühlen behält. Das eingeschlossene Helium wird beim anschließenden Elektroschmelzprozess allmählich freigesetzt, dehnt sich wegen der hohen Temperatur beim Schmelzprozess auf ein Vielfaches seines ursprünglichen Volumens aus und vertreibt dadurch das zwischen den Quarzglasteilchen der Schüttung vorhandene Fremdgas. Wichtig ist dabei auch Folgendes: Helium zeichnet sich durch eine gute Wärmeleitfähigkeit aus. Das gleichmäßige und kontinuierliche Freisetzen auch geringer Mengen an Helium hat deshalb den weiteren günstigen Effekt, dass sich eine Vergleichmäßigung der Temperatur über der Schüttung einstellt, was zu einem besseren und homogeneren Einschmelzen beiträgt.

Die Helium-Freisetzung aus den Quarzglasteilchen erfolgt kontinuierlich und gleichmäßig über die gesamte Schüttung. Auf ein zusätzliches Spülen der Schüttung durch Einleiten von Helium in den Schmelzbehälter kann verzichtet werden, oder die Heliummenge zum Spülen kann im Vergleich zu heliumfreier Einsatzkörnung verringert werden.

Die Helium-Freisetzung aus den Quarzglasteilchen ist umso ausgeprägter, je höher der anfänglich eingeschlossene Heliumgehalt ist. Das Volumen des in den Körnungsteilchen eingeschlossenen Heliums beträgt mindestens 0,5 cm³/kg, vorzugsweise mindestens 10 cm³/kg.

Der oben beschriebene Verglasungsprozess unter Helium bewirkt eine relativ hohe Beladung der Quarzglaskörnung mit diesem Gas. Der Gehalt an Helium pro 1 kg Quarzglaskörnung ist so, dass das Helium beim Ausgasen unter Normalbedingungen (bei Raumtemperatur (25 °C) und Atmosphärendruck) ein Gasvolumen von mindestens 0,5 cm³, vorzugsweise mindestens 10 cm³, einnimmt. Beim Einschmelzen ergibt sich wegen thermischer Ausdehnung ein Gasvolumen an Helium bis zum 3- oder 4-fachen des Glasvolumens unter Normalbedingungen. Das Gasvolumen wird ermittelt, indem die Körnung bis zum erweichen erhitzt und das die entweichende Gasart und deren spezifisches Gasvolumen ermittelt wird.

Der Heliumgehalt in der verglasten Körnung ist durch den Gehalt an Helium in der Drehrohrofen-Atmosphäre einstellbar. Es hat sich bewährt, wenn das Behandlungsgas beim Verglasen gemäß Verfahrensschritt (b) mindestens 50 % Helium enthält, vorzugsweise mindestens 95 %.

Durch den Einsatz von Helium beim Verglasen gelingt ein vollständiges Verglasen der porösen Granulatteilchen bei vergleichsweise niedriger Temperatur und in kurzer Zeit. Durch einen hohen Gehalt an Helium in der Verglasungs-Atmosphäre von mehr als 50 Vol.-% wird außerdem eine besonders hohe Dichte und ein geringer Blasengehalt der verglasten Körnung erreicht. Der Restanteil der Verglasungs-Atmosphäre kann durch inerte Gase oder durch Stickstoff und/oder Sauerstoff gebildet werden, wobei der Volumenanteil der beiden zuletzt genannten Gase vorzugsweise weniger als 30 Vol.-% beträgt.

Die so verglaste Quarzglaskörnung enthält somit herstellungsbedingt Helium. Um dem in der Quarzglaskörnung eingeschlossenen Helium möglichst wenig Zeit zum Ausdiffundieren zu lassen, erfolgt das Abkühlen nach dem Verglasen möglichst rasch.

Die mit Helium beladene Quarzglaskörnung zeigt aus den oben erläuterten Gründen ein günstiges Einschmelzverfahren in einem Elektroschmelzprozess; insbesondere auch unter schwierigen Einschmelzbedingungen, das heißt, bei kurzen Aufschmelzdauern und großen Schmelzmassen, so dass die Dauer zum Entfernen von Restgasen aus der Schüttung im Schmelzprozess begrenzt ist und besonders hohe Anforderungen an die Reproduzierbarkeit der Temperaturverteilung innerhalb des Schmelzbehälters bestehen, wie etwa beim kontinuierlichen Einschmelzen der Körnung in einem Vertikal-Tiegelziehverfahren.

Vorzugsweise wird die Quarzglaskörnung daher für eine Anwendung eingesetzt, bei der der Schmelzbehälter als beheizte Schmelzform mit Bodenauslass ausgeführt ist, durch den die erweichte Quarzglasmasse kontinuierlich als Quarzglasstrang abgezogen wird.

Die Beladungskapazität der Quarzglasteilchen mit Helium und damit die Dauer der Ausgasung beim Einschmelzprozess hängen von der Größe der Quarzglasteilchen ab. Deren Größe wird von der ursprünglichen Größe der Granulatteilchen bestimmt. Das erfindungsgemäße Verfahren führt zu besonders guten Ergebnissen, wenn die Granulatteilchen eine mittlere Korngröße zwischen 100 und 2000 µm, vorzugsweise zwischen 200 µm und 400 µm, aufweisen.

Granulatteilchen mit einer mittleren Korngröße von mehr als 1000 µm lassen sich nur langsam verglasen. Besonders feinkörnige Quarzglaskörnung neigt zum Verbacken mit der Drehrohrwandung.

Um diesen Effekt zu minimieren hat es sich bewährt, einen Feinanteil des SiO₂-Granulats mit Teilchengrößen von weniger als 100 µm vorab so einzustellen, dass er weniger als 10 Gew.-% des Granulat-Gesamtgewichts ausmacht.

Für ein möglichst gleichmäßiges Verglasen der Granulatteilchen und eine möglichst homogene Beladung mit Helium sind etwa gleiche Teilchengrößen vorteilhaft. Im Hinblick hierauf hat es sich auch bewährt, wenn die Granulatteilchen eine enge Teilchengrößenverteilung aufweisen, bei der der dem D₉₀-Wert zugeordnete Teilchendurchmesser maximal doppelt so groß ist wie der dem D₁₀-Wert zugeordnete Teilchendurchmesser. Eine enge Teilchengrößenverteilung zeigt eine vergleichsweise geringe Schüttdichte, was einer Agglomeration beim Verlasen entgegenwirkt. Außerdem entfällt bei im Idealfall monomodaler Größenverteilung der Granulatteilchen der Gewichtsunterschied zwischen den Teilchen als Parameter für eine etwaige Separierung innerhalb der Schüttung, was einem gleichmäßigeren Verglasen der Schüttung förderlich ist.

Die porösen Granulatteilchen werden im Drehrohr auf eine Temperatur erhitzt, die ein Verglasen bewirkt. Bewährt hat sich eine Temperatur im Bereich von 1300 °C bis 1600 °C. Bei Temperaturen von weniger als 1300 °C ist zum vollständigen Verglasen eine lange Behandlungsdauer erforderlich. Vorzugsweise beträgt die Temperatur mindestens 1450 °C. Bei Temperaturen oberhalb von 1600 °C werden Drehrohr und Ofen thermisch übermäßig belastet.

Die mechanische Beanspruchung der Granulate durch die Rotation des Drehrohres vermindert die Gefahr von Agglomeratbildungen. Bei hohen Temperaturen oberhalb von etwa 1400 °C kommt es jedoch zum teilweisen Erweichen des Quarzglases, so dass es in Bereichen mit geringer Bewegung zu Anhaftungen an der Drehrohrwandung kommen kann.

Um dies zu verhindern, ist bei einer bevorzugten Verfahrensweise vorgesehen, dass die Granulatteilchen einer Vibration unterzogen werden.

Die Vibration kann durch Rütteln, Stoßen oder Ultraschall erzeugt werden. Sie erfolgt regelmäßig oder impulsartig von Zeit zu Zeit.

Die hohe Verglasungs-Temperatur kann durch Brenner erzeugt werden, die auf die Granulatteilchen einwirken. Bevorzugt ist jedoch eine Verfahrensweise, bei der das Erhitzen mittels einer das Drehrohr umgebenden Widerstandsheizeinrichtung erfolgt.

Der Wärmeeintrag von außen durch das Drehrohr erfordert eine Ausführung aus einer temperaturstabilen Keramik, wie oben erläutert. Durch diese Art der Beheizung wird verhindert, dass die Granulatteilchen mechanisch (durch Verblasen) oder chemisch (durch Verunreinigungen) von einem Brenngas beeinflusst werden.

Als Werkstoff für das Drehrohr kommt vorteilhafterweise eine Substanz in Betracht, die gleichzeitig die Viskosität von Quarzglas erhöht, vorzugsweise Al₂O₃, ZrO₂, oder Si₃N₄.

Dieser Werkstoff hat in dem Fall die zusätzliche Eigenschaft, dass er einen Dotierstoff enthält, der zu einer Erhöhung der Viskosität von Quarzglas und damit zu einer Verbesserung der thermischen Stabilität von Quarzglasbauteilen beiträgt. Die porösen Granulatteilchen, die den Dotierstoff nicht oder in einer nicht ausreichenden Konzentration enthalten, werden in dem Drehrohr kontinuierlich erhitzt und dabei umgewälzt. Durch den Kontakt mit der den Dotierstoff enthaltenden Innenwandung ergibt sich ein feinteiliger Abrieb, der zu einer gewünschten Dotierung der Granulatteilchen führt oder dazu beiträgt. Der Dotierstoff liegt im Quarzglas in der Regel als Oxid vor. Ein Kerngedanke dieser Ausführungsform des erfindungsgemäßen Verfahrens besteht somit darin, das vollständige Verglasen der porösen SiO₂-Granulatteilchen in einem Drehrohrofen bei hoher Temperatur durchzuführen, was ermöglicht wird durch eine geeignete Atmosphäre beim Verglasen und durch einen temperaturfesten Werkstoff für das Drehrohr, der gleichzeitig durch Abrieb als Dotierstoffquelle für die Quarzglaskörnung dient. Dieses Verfahren ermöglicht ein kontinuierliches Verglasen der SiO₂-Granulatteilchen und dabei gleichzeitig das homogene Beladen mit dem die Viskosität erhöhenden Dotierstoff.

Als geeignete Dotierstoffe in diesem Sinne kommen insbesondere Al₂O₃ und Stickstoff (in Form von Si₃N₄) in Betracht. Für einen ausreichenden Eintrag dieser Dotierstoffe ist es vorteilhaft, wenn die Drehrohr-Innenwandung zumindest im hochbelasteten Bereich zu mindestens 90 Gew.-%, vorzugsweise zu mindestens 99 Gew.-% aus der betreffenden Substanz besteht.

Insbesondere Al₂O₃ zeichnet sich durch eine hohe Temperaturfestigkeit, eine gute Temperaturwechselbeständigkeit sowie Korrosionsfestigkeit aus. Im einfachsten Fall besteht die gesamte Innenwandung des Drehrohres aus Al₂O₃. Andernfalls besteht derjenige Teil des Drehrohres aus Al₂O₃, der der höchsten Temperaturbelastung ausgesetzt ist.

Bei hohen Temperaturen können die Granulatteilchen und die verglasten Quarzglasteilchen durch Abrieb des Materials der Drehrohr-Innenwandung verunreinigt werden. Bereits geringe Alkaligehalte erhöhen die Entglasungsneigung von Quarzglas beträchtlich. Daher weist die Substanz der Drehrohr-Innenwandung vorzugsweise einen Alkaligehalt von weniger als 0,5% auf.

Für eine Dotierung der Quarzglasteilchen mit Al₂O₃ wird dieser Kontamination durch Verunreinigungen entgegengewirkt, wenn das Drehrohr aus synthetisch hergestelltem Al₂O₃ besteht.

Synthetisch hergestelltes Al₂O₃ mit einer Reinheit von mehr als 99 Gew.-% ist unter dem Handelsnamen "Alsint" bekannt. Um Materialkosten zu minimieren, kann der synthetische Werkstoff auf den Bereich einer dünnen Innenauskleidung des Drehrohres beschränkt sein.

Bei Einsatz eines Al₂O₃-haltigen Drehrohres kann so auf einfache Art und Weise eine Al₂O₃-Dotierung der Quarzglaskörnung im Bereich von 1 bis 20 Gew-ppm erzeugt werden.

Alternativ dazu besteht die Drehrohr-Innenwandung aus ZrO₂ oder TiO₂.

Diese Werkstoffe zeichnen sich durch ausreichend hohe Schmelztemperaturen für das Verglasen des SiO₂-Granulats aus (ZrO₂: ca. 2700 °C; TiO₂: ca. 1855 °C) und sie sind in geringer Konzentration für viele Anwendungen als Verunreinigung unschädlich, wie etwa für die Halbleiterfertigung.

Im Hinblick auf ein reproduzierbares und kostengünstiges Herstellungsverfahren wird das SiO₂-Granulat vor dem Verglasen einer Reinigung durch Erhitzen in einer halogenhaltigen Atmosphäre unterzogen, wobei das Reinigen des SiO₂-Granulats in einem zweiten Drehrohrofen erfolgt.

Bei dieser Verfahrensvariante erfolgen die sich an die Granulatherstellung anschließenden thermischen Hochtemperatur-Behandlungsschritte, nämlich das Reinigen und das Verglasen, jeweils in einem Drehrohrofen. Dadurch wird ein weitgehend kontinuierlicher Herstellungsprozess erreicht und ein Wechsel des Ofensystems vermieden. Dies erleichtert die zeitliche Abstimmung und räumliche Anpassung bei aufeinander folgenden Behandlungsschritten und trägt zu einer Verkürzung der Durchlaufzeit des Granulats bei.

Die Drehrohröfen sind auf die spezifischen Anforderungen des jeweiligen Behandlungsschritts angepasst. Dabei kann ein Drehrohrofen in mehrere voneinander abgeschottete Behandlungsräume unterteilt sein. Insbesondere können bei bereits weitgehend trockenem Granulat das Fertigtrocknen und Reinigen in einem Verfahrensschritt in einem Reinigungsofen erfolgen. Im Idealfall ist aber für jeden der Behandlungsschritte Trocknen, Reinigen und Verglasen ein eigener Drehrohrofen vorgesehen. Dadurch können Behandlungsdauer, -temperatur und-atmosphäre jeweils unabhängig voneinander an den jeweiligen Prozess optimiert werden, was zu einem qualitativ besseren Endprodukt führt. Dadurch kann beispielsweise bei den Übergängen vom Trocknen zum Reinigen und vom Reinigen zum Verglasen jeweils die Restwärme vom Vorprozess genutzt werden.

Im Fall von Drehrohren aus unterschiedlichen Werkstoffen können diese stoßweise aneinander grenzen, vorzugsweise sind sie aber mit gewissem Spiel ineinandergesteckt, um Probleme wegen unterschiedlicher thermischer Ausdehnungskoeffizienten der jeweiligen Werkstoffe zu vermindern.

Um die Atmosphären in den unterschiedlichen Zonen des Drehrohrofens weitgehend unabhängig voneinander einstellen zu können, sind benachbarte Zonen des Drehrohrofens fluidisch voneinander in gewissem Maße separiert und zu diesem Zweck vorzugsweise durch mit Öffnungen versehene Trennscheiben oder durch Labyrinthfallen unterteilt.

Das Reinigen im Drehrohr erfolgt unter chlorhaltiger Atmosphäre bei einer Temperatur im Bereich zwischen 900 und 1250 °C. Die chlorhaltige Atmosphäre bewirkt insbesondere eine Reduzierung an Alkali- und Eisenverunreinigungen aus dem SiO₂-Granulat. Bei Temperaturen unterhalb von 900 °C ergeben sich lange Behandlungsdauern und bei Temperaturen oberhalb von 1250 °C besteht die Gefahr des Dichtsinterns des porösen Granulats unter Einschluss von Chlor oder gasförmigen Chlorverbindungen.

Im Sinne einer weitgehend kontinuierlichen Verfahrensweise wird auch zum Trocknen und zum Reinigen des SiO₂-Granulats nur ein Drehrohrofen eingesetzt, wobei dieser in Richtung der Mittelachse gesehen in Zonen unterteilt ist, umfassend eine Trocknungszone und eine Reinigungszone.

Die Unterteilung in Zonen erfolgt vorzugsweise wiederum bevorzugt durch mit Öffnungen versehene Trennscheiben oder durch Labyrinthfallen. Im Bereich der Trocknungs- und Reinigungszone besteht die Innenwandung des Drehrohres vorzugsweise aus Quarzglas, um Verunreinigungen des Granulats zu vermeiden.

Laufen mehrere Prozessschritte in einem gemeinsamen Drehrohrofen ab, wie etwas Trocknen/Reinigen oder Reinigen/Verglasen kann jede der Zonen mit einer eigenen Heizeinrichtung versehen sein. Im Hinblick auf eine gute Energieausnutzung werden die Drehrohre zum Reinigen und Verglasen jeweils mittels einer das Drehrohr umgebenden Widerstandsheizeinrichtung beheizt.

Das Trocknen des Granulats erfolgt vorzugsweise durch Erwärmen unter Luft bei einer Temperatur im Bereich zwischen 200 und 600 °C.

Bei dieser Verfahrensweise ist für das Trocknen des Granulats ein separater Trocknungsofen vorgesehen, der vorzugsweise als Drehrohrofen ausgebildet ist. Die Temperatur ist konstant oder wird bei Trocknungsfortschritt erhöht. Bei Temperaturen unterhalb von 200 °C ergeben sich lange Trocknungsdauern. Oberhalb von 600 °C kann es zu einem raschen Austritt eingeschlossener Gase kommen, der zur Zerstörung der Granulate führen kann.

Die verglasten Quarzglasteilchen sind zur Herstellung von Bauteilen aus opakem oder transparentem Quarzglas einsetzbar, wie beispielsweise eines Rohres aus opakem Quarzglas, das in einem Schleuderverfahren hergestellt wird. Sie können an und für sich auch als teilchenförmiges Ausgangsmaterial zur Herstellung eines Quarzglaszylinders im sogenannten Verneuil-Verfahren oder zur Herstellung eines Quarzglastiegels mittels Lichtbogen oder Plasma weiterverarbeiteten und eingeschmolzen werden. Bei diesen Verfahrensweisen werden die Quarzglasteilchen schlagartig gesintert, so dass wenig Zeit für das Ausgasen des eingeschlossenen Heliums verbleibt. Im verglasten Teilchen eingeschlossenes Gas wirkt hier eher blasenbildend, also nachteilig. Erfindungsgemäß werden die Quarzglasteilchen wegen ihres vergleichsweise hohen Heliumgehalts jedoch durch Einschmelzen in einem elektrisch beheizten Schmelzbehälter eingesetzt, wie oben erläutert. Dieser stellt einen Innenraum bereit, in den das eingeschlossene Helium entweichen und seine schmelzfördernde Wirkung über eine gewisse Dauer entfalten kann.

### Ausführungsbeispiel

Nachfolgend wird die Erfindung anhand eines Ausführungsbeispiels und einer Zeichnung näher erläutert. Es zeigt in schematischer Darstellung
- **Figur 1**: einen Drehrohrofen zur Durchführung des Verglasungs- und Nachbehandlungsschritts beim erfindungsgemäßen Verfahren in einer Seitenansicht,
- **Figur 2**: ein Temperaturprofil über der Länge des Drehrohrofens, und
- **Figur 3**: eine Tiegelschmelzvorrichtung zum Ziehen eines Strangs aus Quarzglas gemäß der Erfindung.

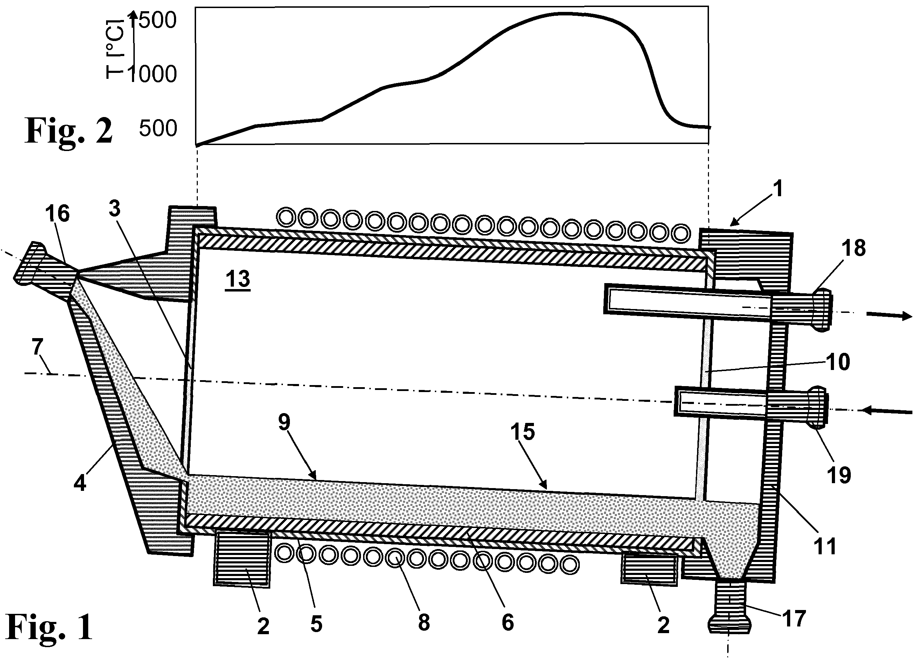

**Figur 1** zeigt einen auf Laufrollen 2 gelagerten Drehrohrofen 1. Der Drehrohrofen 1 weist im Wesentlichen einen Rahmen 5 aus SiC auf, in dem ein Drehrohr 6 aus synthetisch hergestelltem Al₂O₃ (Handelsname Alsint) mit einem Innendurchmesser von 150 mm und einer Länge von 1,8 m fixiert ist. Das Drehrohr 6 ist um eine Mittelachse 7 rotierbar und mittels einer am Außenmantel vorgesehenen Widerstandsheizeinrichtung 8 beheizbar.

Der Drehrohrofen 1 ist in Längsrichtung 7 gegenüber der Horizontalen leicht geneigt, um den Transport einer Schüttung aus porösem SiO₂-Granulat 9 von der Einlaufseite 3 des Drehrohrofens 1 zur Entnahmeseite 10 herbeizuführen. Die offene Einlaufseite 3 ist mittels eines rotatorisch feststehenden Einlaufgehäuses 4 verschlossen. Das Einlaufgehäuse 4 ist mit einem Einlass 16 für die Zufuhr von porösem SiO₂ Granulat 9 und mit einem weiteren Einlass (nicht dargestellt) für die Zufuhr von Helium und anderen Behandlungsgasen ausgestattet.

Die offene Entnahmeseite 10 des Drehrohres 6 ist mittels eines ebenfalls rotatorisch feststehenden Entnahmegehäuses 11 verschlossen. Das Entnahmegehäuse 11 ist mit einem Auslass 17 für die Entnahme von verglaster Quarzglaskörnung 15 versehen, über den auch Gas aus dem Drehrohrofen 1 ausströmen kann. Zur Absaugung von Gas ist ein Absaugstutzen 18 vorgesehen, der im oberen Bereich des Drehrohrofens 1 angeordnet ist. Weiterhin ist das Entnahmegehäuse 11 mit einem Gaseinlassstutzen 19 ausgestattet, mittels dem ein Gas, beispielsweise Argon, in das Drehrohr 6 eingeleitet werden kann.

Im Folgenden wird das erfindungsgemäße Verfahren anhand von Ausführungsbeispielen näher beschrieben:

### Herstellung, Trocknung und Reinigung von SiO₂-Granulat

### Beispiel A

Das Granulat wurde durch Granulation eines Schlickers mit 60 Gew.-% Restfeuchte aus pyrogener Kieselsäure (nanoskaliges SiO₂-Pulver, SiO₂-Sootstaub) und VE-Wasser im Intensivmischer hergestellt. Nach der Granulation beträgt die Restfeuchte < 20%. Das Granulat wurde auf Korngrößen < 3mm abgesiebt.

Durch Trocknung bei 400°C in einem Drehrohrofen (Durchsatz: 20 kg/h) unter Luft wurde die Restfeuchte auf <1 % abgesenkt. Es erfolgt eine Absiebung auf die Fraktion 100 bis 750 µm, das heißt, der Feinanteil mit Korngrößen <100 µm wird entfernt.

Anschließend erfolgt eine Reinigung und weitere Trocknung in HCl-haltiger Atmosphäre im Drehrohrofen bei einer Maximaltemperatur von 1040 °C (Durchsatz:
10 kg/h). Dabei wird die spezifische Oberfläche (BET) um ca. 50% verringert.

Es wurde ein SiO₂-Granulat aus synthetischem, undotiertem Quarzglas mit hoher Reinheit erhalten. Es besteht im Wesentlichen aus porösen, sphärischen Teilchen mit einer Teilchengrößenverteilung mit einem D₁₀-Wert von 200 µm, einem D₉₀-Wert von 400 µm und einem mittleren Teilchen-Durchmesser (D₅₀-Wert) von 300 µm.

### Beispiel B

Das Granulat wurde durch Schnellgranulation aus pyrogener Kieselsäure (nanoskaliges SiO₂-Pulver, SiO₂-Sootstaub) und VE-Wasser im Intensivmischer hergestellt. Dazu wird VE-Wasser im Intensivmischer vorgelegt und unter Mischung pyrogene Kieselsäure zugegeben, bis die Restfeuchte ca. 23 Gew.-% beträgt und ein Granulat hergestellt ist. Das Granulat wird auf Korngrößen ≤ 2mm abgesiebt. Grobe Teilchen können vorab durch Einsatz eines Walzenbrechers zerkleinert werden, um die Ausbeute zu erhöhen.

Durch Trocknung bei 350 °C in einem Drehrohrofen (Durchsatz 15 kg/h) unter Luft wird die Restfeuchte auf < 1% abgesenkt. Der Feinanteil mit Korngrößen < 100 µm wurde entfernt; ansonsten erfolgte keine weitere Absiebung.

Anschließend erfolgt eine Reinigung und weitere Trocknung in HCl-haltiger Atmosphäre im Drehrohrofen bei Temperaturen von 1050 - 1150 °C (Durchsatz:
10 kg/h). Die Summe chemischer Verunreinigungen wird bei der Heißchlorierung auf kleiner 1/10 des Ausgangsmaterials verringert (d.h. auf < 10 ppm).

Das Granulat besteht im Wesentlichen aus porösen Teilchen mit einer Teilchengrößenverteilung mit einem D10-Wert von 300 µm, einem D90-Wert von 450 µm und einem mittleren Teilchen-Durchmesser (D50-Wert) von 350 µm.

### Verlasen des Granulats

Dem um seine Rotationsachse 7 mit einer Umdrehungsgeschwindigkeit von 8 U/min rotierenden Drehrohr 6 wird mit einer Zufuhrrate von 15 kg/h kontinuierlich undotiertes, poröses SiO₂-Granulat 9 zugeführt.

Das Drehrohr 6 ist in Längsrichtung 7 im spezifischen Schüttwinkel der Granulatteilchen 9 geneigt, so dass sich über seine Länge eine gleichmäßige Dicke der Granulat-Schüttung einstellt. Die gleichmäßige Schüttungsdicke trägt zu einer gleichmäßigen Einwirkung von Helium bei und erleichtert das homogene Verglasen. Die in Figur 1 im Einlassgehäuse 4 dargestellte Schüttung zeigt einen abweichenden Schüttwinkel; dies dient nur der vereinfachten schematischen Darstellung

Der Innenraum 13 des Drehrohres 6 wird mit Helium geflutet; der Heliumgehalt der Atmosphäre beträgt etwa 90 Vol.-%. Die Granulat-Schüttung wird kontinuierlich umgewälzt und dabei mittels der Widerstandsheizeinrichtung 8 innerhalb des Drehrohres 6 erhitzt und allmählich zu Quarzglasteilchen 15 verglast. Die Maximaltemperatur kurz vor etwa dem hinteren Drittel des Drehrohres 6 beträgt etwa 1460 °C. Das Drehrohr 6 aus Al₂O₃ hält dieser Temperatur ohne weiteres stand.

Da das Drehrohr 6 bis nahe an das Auslassgehäuse 11 beheizt ist, nimmt die Temperatur vom Maximalwert bis zum Auslassgehäuse 11 rasch ab. Dort liegt die mittlere Oberflächentemperatur der verglasten Körnung 15 bei etwas mehr als 500 °C.

Ein bislang als ideal gefundenes axiales Temperaturprofil über die Länge des Drehrohres 6 ist im Diagramm von **Figur 2** schematisch dargestellt. Auf der y-Achse ist die Temperatur T der Oberfläche der Granulat-Schüttung 9 (ermittelt mittels Pyrometer) gegen die axiale Position im Drehrohr 6 aufgetragen. Unmittelbar nach dem Zuführen des Granulats wird dieses bei einer Temperatur um 500 °C während einer Dauer von 30 min getrocknet, und danach bei allmählich steigender Temperatur bei etwa 1000 °C bis 1300 °C thermisch vorverdichtet. Dabei findet gleichzeitig ein Austausch des in dem porösen Granulat vorhandenen Gases durch Helium statt. Dieser Verdichtungs- und Gasaustauschvorgang dauert etwa 60 min. Anschließend wird die Granulat-Schüttung 9 zum vollständigen Verglasen aufgeheizt und erreicht dabei eine Maximaltemperatur um 1460 °C. Bis dahin beträgt die mittlere Verweilzeit im Drehrohrofen 6 etwa 3h.

In diesem Prozessstadium ist der Heliumgehalt der verglasten Quarzglasteilchen 15 relativ hoch. Danach erfolgt ein rasches Abkühlen der verglasten und mit Helium hochbeladenen Quarzglasteilchen 15, so dass ein Entgasen weitgehend vermieden wird, indem Helium wenig Gelegenheit zum Ausdiffundieren aus der dichten Quarzglaskörnung erhält. Nach Abschluss des Verglasungsprozesses liegt das Gasvolumen an theoretisch freisetzbarem Heliumgas pro kg Quarzglaskörnung bei etwa 3 cm³ (Gasvolumen normiert auf 25 °C und Atmosphärendruck)

Die oben genannten Prozessparameter führen in Verbindung mit der Aufenthaltsdauer des Granulats 9 im Drehrohrofen 1 und der Heliumatmosphäre in der Verglasungszone 13 dazu, dass die offene Porosität weitgehend verschwindet. Die Oberfläche ist dicht. Die Quarzglasteilchen 15 sind bei Entnahme in diesem Verfahrensstadium augenscheinlich vollkommen transparent.

Kommt es zu Agglomeraten, werden diese infolge der mechanischen Beanspruchung in der sich bewegenden Granulat-Schüttung 9 oder durch Vibration des Drehrohres 6 wieder aufgelöst.

Gleichzeitig kommt es zu einem gleichmäßigen Abrieb von Al₂O₃, das auf die Oberfläche der Granulatteilchen 9 und in deren Poren gelangt. Die so erzeugte, verglaste Quarzglaskörnung weist homogene Dotierung mit Al₂O₃ um 15 Gew.-ppm auf. Anhaftungen an der Innenwandung des Drehrohres 6 werden weitgehend vermieden.

Die vollständig verglasten und homogen dotierten Quarzglasteilchen haben eine Dichte von mehr als 2,0 g/cm³ und eine BET-Oberfläche von weniger als 1m²/g und sie weisen einen vergleichsweise hohen Heliumgehalt auf. Die Quarzglaskörnung wird über das Austragsgehäuse 11 und den Auslassstutzen 17 kontinuierlich entnommen.

### Ziehen eines Quarzglasrohres aus einem Tiegel

Die so erzeugte, mit Helium beladene und homogen mit Al₂O₃ dotierte Quarzglaskörnung wird zur Herstellung eines Quarzglasrohres in einem Vertikal-Tiegelziehverfahren eingesetzt.

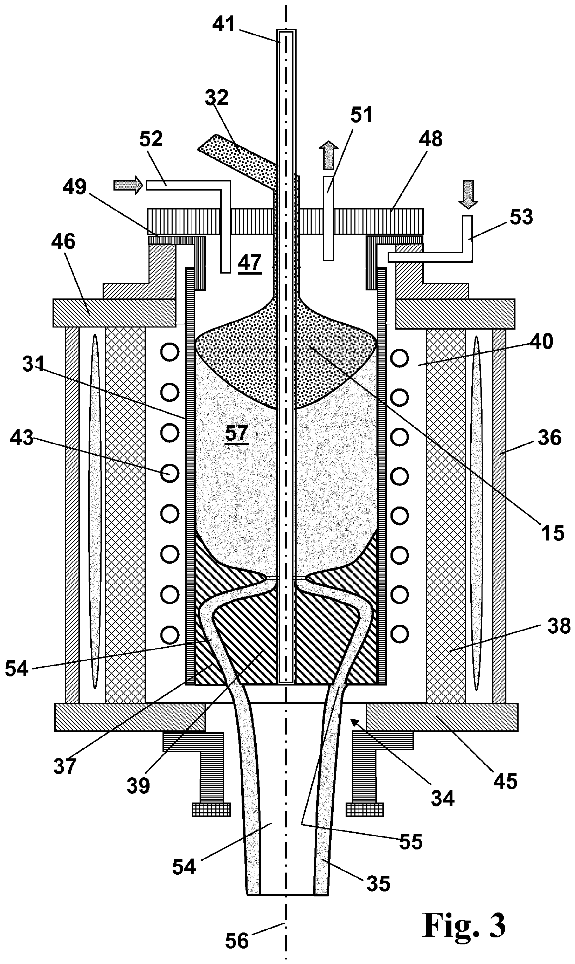

Der in **Figur 3** schematisch gezeigte Ziehofen 1 umfasst einen Schmelztiegel 31 aus Wolfram, in den von oben über einen Zufuhrstutzen 32 kontinuierlich die verglaste Quarzglaskörnung 15 eingefüllt wird.

Der Schmelztiegel 31 ist von einem wassergekühlten Ofenmantel 36 unter Bildung eines mit Schutzgas gespülten Schutzgasraums 40 umgeben, innerhalb dessen eine poröse Isolationsschicht 38 aus oxidischem Isolationsmaterial und eine Widerstandsheizeinrichtung 43 zum Erhitzen der SiO₂-Körnung 15 untergebracht sind. Der Schutzgasraum 40 ist nach unten hin offen und ansonsten mit einer Bodenplatte 45 und mit einer Deckplatte 46 nach Außen abgedichtet. Der Schmelztiegel 31 umschließt einen Tiegel-Innenraum 47, der ebenfalls gegenüber der Umgebung mittels einer Abdeckung 48 und einem Dichtelement 49 abgedichtet ist.

Durch die Abdeckung 48 ragt ein Einlass 52 und ein Auslass 51 für ein Tiegelinnenraum-Gas. Dabei handelt es sich um ein Gasgemisch aus 90 Vol.-% Wasserstoff und 10 Vol.-% Helium. Der Schutzgasraum 40 ist im oberen Bereich mit einem Gaseinlass 53 für reinen Wasserstoff versehen.

Im Bodenbereich des Schmelztiegels 31 befindet sich eine Ziehdüse 34 aus Wolfram. Diese setzt sich zusammen aus einem Ziehdüsen-Außenteil 37 und einem Dorn 39. Der Dorn 39 der Ziehdüse 34 ist mit einem Halterohr 41 aus Wolfram verbunden, das sich durch den Tiegel-Innenraum 47 erstreckt und über die obere Abdeckung 48 aus diesem herausgeführt ist. Außer zur Halterung des Dorns 39 dient das Halterohr 41 auch der Zufuhr eines Prozessgases zum Einstellen eines vorgegebenen Blasdrucks in der Innenbohrung 54 des Rohrstrangs 35.

Die weiche Quarzglasmasse 57 gelangt über eine Strömungskanal 54 zwischen Dorn 39 und Ziehdüsen-Außenteil bis zum Düsenauslass 55 und wird als Rohrstrang 35 mit einem Innendurchmesser von 190 mm und einem Außendurchmesser von 210 mm vertikal nach unten in Richtung der Ziehachse 56 abgezogen.

Das Gewicht der Quarzglasmasse 57 bewirkt im Bereich des Düsenauslasses 55 einen "hydrostatischen Druck", wodurch die erweichte Quarzglasmasse 57 den Ringspalt mit einer Durchflussrate von etwa 28 kg/h passiert.

Beim Durchlaufen des Schmelztiegels 1 von oben nach unten setzt die Quarzglaskörnung das eingeschlossene Helium frei, so dass sich dieses innerhalb der Schüttung der Quarzglaskörnung 15 gleichmäßig verteilt, die dort vorhandene Luft austreibt und durch seine gute Wärmeleitfähigkeit zu einem homogenen und gleichmäßigen Erhitzen beiträgt.

Das abgezogene Quarzglasrohr wurde in Bezug auf Blasen, Einschlüsse und Schlieren optisch untersucht. Die Ergebnisse sind in Tabelle 1 unter Probe A zusammengefasst. Bei der Vergleichsprobe C wurde heliumfreie Standard-Quarzglaskörnung gleicher Korngröße eingesetzt und gleichermaßen verarbeitet wie oben für Probe A erläutert. Bei Probe C wurde Standard-Quarzglas und Helium enthaltende Quarzglaskörnung im Verhältnis 50:50 vorab homogen vermischt.

**Tabelle 1**

| | **A** | **B** | **C** |
|---|---|---|---|
| **Heliumbeladung** | 100 | 50:50 | 0 |
| **Blasen** | ++ | + | - |
| **Schlieren** | + | + | - |
| **Einschlüsse** | + | + | 0 |

Die Qualität hinsichtlich des Auftretens von Blasen, Schlieren und Einschlüssen ist in Tabelle 1 qualitativ bewertet. Dabei setzt sich die Symbolik der qualitativen Bewertung wie folgt um:
- "++": sehr gut,
- "+": gut,
- "0": akzeptabel,
- "-": schlecht und

## Patentansprüche

1. Verfahren zur Herstellung eines Formkörpers aus elektrogeschmolzenem synthetischem Quarzglas, indem synthetisch erzeugte Quarzglaskörnung (15) bereitgestellt und in einem elektrisch beheizten Schmelzbehälter (31) unter Bildung einer erweichten Quarzglasmasse (57) erhitzt und die erweichte Quarzglasmasse (57) zu dem Formkörper geformt wird, **dadurch gekennzeichnet, dass** synthetisch erzeugte Quarzglaskörnung (15) aus Körnungsteilchen eingesetzt wird, in denen Helium eingeschlossen ist und deren Bereitstellung folgende Verfahrensschritte umfasst:
(a) Granulation pyrogen hergestellter Kieselsäure unter Bildung eines SiO₂-Granulats aus porösen Granulatteilchen (9),
(b) Verglasen des SiO₂-Granulats in einem Drehrohrofen (1) mit einem mindestens teilweise aus keramischem Werkstoff bestehenden Drehrohr (6) und unter einem Behandlungsgas, das mindestens 30 Vol.-% Helium enthält, unter Bildung der Körnungsteilchen mit eingeschlossenem Helium, und
(c) Abkühlen der verglasten Körnungsteilchen derart, dass das in den Körnungsteilchen eingeschlossene Helium beim Ausgasen bei 25°C und unter Atmosphärendruck ein Volumen von mindestens 0,5 cm³/kg einnimmt.

2. Verfahren nach Anspruch 1, **dadurch gekennzeichnet, dass** das in den Körnungsteilchen eingeschlossene Helium ein Volumen von e mindestens 10 cm³/kg, einnimmt.

3. Verfahren nach Anspruch 1 oder 2, **dadurch gekennzeichnet, dass** das Behandlungsgas beim Verglasen gemäß Verfahrensschritt (b) mindestens 50 % Helium enthält, vorzugsweise mindestens 95 %.

4. Verfahren nach einem der vorhergehenden Ansprüche, **dadurch gekennzeichnet, dass** der Schmelzbehälter (1) als beheizte Schmelzform mit Bodenauslass (55) ausgeführt ist, durch den die erweichte Quarzglasmasse (57) kontinuierlich als Quarzglasstrang (35) abgezogen wird.

5. Verfahren nach einem der vorhergehenden Ansprüche, **dadurch gekennzeichnet, dass** die Granulatteilchen (9) eine mittlere Korngröße zwischen 20 und 2000 µm, vorzugsweise zwischen 100 µm und 400 µm, aufweisen (jeweils D₅₀-Wert).

6. Verfahren nach einem der vorhergehenden Ansprüche, **dadurch gekennzeichnet, dass** ein Feinanteil des SiO₂-Granulats mit Teilchengrößen von weniger als 100 µm vorab so eingestellt wird, dass er weniger als 10 Gew.% des Granulat-Gesamtgewichts ausmacht.

7. Verfahren nach einem der vorhergehenden Ansprüche, **dadurch gekennzeichnet, dass** die Granulatteilchen (9) beim Verglasen auf eine Temperatur im Bereich von 1300 °C bis 1600 °C erhitzt werden.

8. Verfahren nach einem der vorhergehenden Ansprüche, **dadurch gekennzeichnet, dass** die Granulatteilchen (9) oder die verglaste Quarzglaskörnung (15) einer Vibration unterzogen werden.

9. Verfahren nach einem der vorhergehenden Ansprüche, **dadurch gekennzeichnet, dass** das Erhitzen der Granulatteilchen (9) mittels einer das Drehrohr (6) umgebenden Widerstandsheizeinrichtung (8) erfolgt.

10. Verfahren nach einem der vorhergehenden Ansprüche, **dadurch gekennzeichnet, dass** das Drehrohr (6) aus einer Substanz besteht, die gleichzeitig die Viskosität von Quarzglas erhöht, vorzugsweise aus Al₂O₃, ZrO₂ oder Si₃N₄.

11. Verfahren nach Anspruch 10, **dadurch gekennzeichnet, dass** die Substanz einen Alkaligehalt von weniger als 0,5% aufweist.

12. Verfahren nach Anspruch 10 oder 11, **dadurch gekennzeichnet, dass** die Drehrohr-Innenwandung aus synthetisch hergestelltem Al₂O₃ besteht.

13. Verfahren nach einem der Ansprüche 10 bis 12, **dadurch gekennzeichnet, dass** unter Einsatz eines Al₂O₃-haltigen Drehrohres (6) eine Al₂O₃-Dotierung der Quarzglaskörnung (15) im Bereich von 1 bis 20 Gew.-ppm erzeugt wird.

14. Verfahren nach einem der vorhergehenden Ansprüche, **dadurch gekennzeichnet, dass** das SiO₂-Granulat (9) vor dem Verglasen einer Reinigung durch Erhitzen in einer halogenhaltigen Atmosphäre unterzogen wird, und dass das Reinigen des SiO₂-Granulats (9) in einem zweiten Drehrohrofen erfolgt.

15. Verfahren nach Anspruch 14, **dadurch gekennzeichnet, dass** der zweite Drehrohrofen zum Trocknen und zum Reinigen des SiO₂-Granulats (9) eingesetzt wird, und in Richtung der Mittelachse (7) gesehen in Zonen unterteilt ist, umfassend eine Trocknungszone und eine Reinigungszone, wobei benachbarte Zonen durch eine mit Öffnungen versehene Trennscheiben oder durch Labyrinthfallen unterteilt sind.

16. Verfahren nach Anspruch 14 oder 15, **dadurch gekennzeichnet, dass** das Reinigen im Drehrohr unter chlorhaltiger Atmosphäre bei einer Temperatur im Bereich zwischen 900 und 1250 °C erfolgt.

## Claims

1. A method for producing a molded body from electrically melted synthetic quartz glass comprising: providing synthetically produced quartz-glass granules (15) and heating the quartz-glass granules (15) in an electrically heated melting vessel (31) so as to form a softened quartz glass mass (57) and molding the softened quartz-glass mass (57) into the molded body, **characterized in that** the synthetically produced quartz glass granules (15) are of granular particles that have helium entrapped therein, whereby said providing of said granular particles comprises the following steps:
(a) granulation of pyrogenically produced silicic acid so as to form a SiO₂ granulate of porous granulate particles (9);
(b) vitrifying the SiO₂ granulate in a rotary kiln (1) having a rotary tube (6) consisting at least in part of ceramic material, and in a treatment gas which contains at least 30% by vol. of helium so as to form the granular particles with entrapped helium and
(c) cooling the vitrified granular particles so as to entrap helium in the granular particles, wherein the helium entrapped in the granular particles occupies a volume of at least 0.5 cm³/kg during outgassing at 25°C and atmospheric pressure.

2. The method according to claim 1, **characterized in that** the helium entrapped in the granular particles occupies a volume of at least 10 cm³/kg.

3. The method according to claim 1 or 2, **characterized in that** the treatment gas during vitrifying according to method step (b) contains at least 50% helium, preferably at least 95%.

4. The method according to any one of the preceding claims, **characterized in that** the melting vessel (1) is configured as a heated melting mold with bottom outlet (55) through which the softened quartz-glass mass (57) is continuously withdrawn as a quartz-glass strand (35).

5. The method according to any one of the preceding claims, **characterized in that** the granulate particles (9) have a mean grain size between 20 µm and 2000 µm, preferably between 100 µm and 400 µm (D₅₀ value each time).

6. The method according to any one of the preceding claims, **characterized in that** a fines content of the SiO₂ granulate with particle sizes of less than 100 µm is set in advance so that it accounts for less than 10% by wt. of the total weight of the granulate.

7. The method according to any one of the preceding claims, **characterized in that** the granulate particles (9) are heated during vitrifying to a temperature in the range of from 1300°C to 1600°C.

8. The method according to any one of the preceding claims, **characterized in that** the granulate particles (9) or the vitrified quartz-glass granules (15) are subjected to vibration.

9. The method according to any one of the preceding claims, **characterized in that** the granulate particles (9) are heated by means of a resistance heater (8) surrounding the rotary tube (6).

10. The method according to any one of the preceding claims, **characterized in that** the rotary tube (6) consists of a substance which simultaneously increases the viscosity of quartz glass, preferably of Al₂O₃ ZrO₂ or Si₃N₄.

11. The method according to claim 10, **characterized in that** the substance has an alkali content of less than 0.5%.

12. The method according to claim 10 or 11, **characterized in that** the inner wall of the rotary tube consists of synthetically produced Al₂O₃.

13. The method according to any one of claims 10 to 12, **characterized in that** Al₂O₃ doping of the quartz glass granules (15) in the range of 1-20 wt. ppm is effected by using an Al₂O₃-containing rotary tube (6).

14. The method according to any one of the preceding claims, **characterized in that** prior to vitrifying the SiO₂ granulate (9) is subjected to cleaning by heating in a halogen-containing atmosphere, and that the cleaning of the SiO₂ granulate (9) is carried out in a second rotary kiln.

15. The method according to claim 14, **characterized in that** the second rotary kiln is used for drying and cleaning the SiO₂ granulate (9) and, when viewed in the direction of the central axis (7), is subdivided into zones, including a drying zone and a cleaning zone, wherein adjacent zones are subdivided by separating screens provided with openings or by labyrinth traps.

16. The method according to claim 14 or 15, **characterized in that** the cleaning in the rotary tube is carried out in a chlorine-containing atmosphere at a temperature in the range between 900°C and 1250°C.

## Revendications

1. Procédé pour la fabrication d'un corps moulé composé de verre de quartz synthétique dans lequel le grain de quartz produit synthétiquement (15) est prévu et est chauffé dans une cuve de fusion chauffée électriquement (31) pour former une masse de verre de quartz ramollie (57) et la masse de verre de quartz ramollie (57) est formée en un corps moulé, **caractérisé en ce que** le grain de quartz produit de manière synthétique (15) est constitué de particules de grain où est chargé de l'hélium et dont la préparation comprend les étapes suivantes :
(a) granulation d'un acide silicique pyrogéné pour former un granulé de SiO₂ en particules de granulés poreux (9),
(b) vitrification du granulé de SiO₂ dans un four tubulaire rotatif (1) avec un tube rotatif se composant au moins partiellement d'un matériau céramique tubulaire rotatif (6) et dans un gaz de traitement contenant au moins 30 % volumique d'hélium pour former les particules de granulat avec de l'hélium piégé, et
(c) refroidissement des particules de granulés vitrifiées de sorte que l'hélium piégé dans les particules de granulés absorbe un volume d'au moins 0,5 cm³/kg au dégazage à 25°C et sous pression atmosphérique.

2. Procédé selon la revendication 1, **caractérisé en ce que** l'hélium piégé dans les particules de granulés absorbe un volume d'au moins d'au moins 10 cm³/kg.

3. Procédé selon la revendication 1 ou 2, **caractérisé en ce que** le gaz de traitement lors de la vitrification selon l'étape de procédé (b) contient au moins 50% d'hélium, de préférence au moins 95%.

4. Procédé selon l'une quelconque des revendications précédentes, **caractérisé en ce que** le récipient de fusion (1) est réalisé comme moule de fusion chauffé avec une sortie de four (55) à travers laquelle est extraite la masse de verre de quartz ramollie (57) de manière continue en formant un brin de verre de quartz (35).

5. Procédé selon l'une quelconque des revendications précédentes, **caractérisé en ce que** les particules de granulé (9) ont une taille moyenne de particule comprise entre 20 et 2000 µm, de préférence entre 100 µm et 400 µm (respectivement valeur D₅₀).

6. Procédé selon l'une quelconque des revendications précédentes, **caractérisé en ce qu'**une fraction fine du granulé SiO₂ ayant des tailles de particules inférieures à 100 µm est fixée à l'avance de manière à représenter moins de 10 pour cent du poids total des granulés.

7. Procédé selon l'une quelconque des revendications précédentes, **caractérisé en ce que** les particules de granulés (9) sont chauffées à une température comprise entre de 1300°C à 1600°C pendant la vitrification.

8. Procédé selon l'une quelconque des revendications précédentes, **caractérisé en ce que** les particules de granulés (9) ou le grain de verre de quartz vitrifié (15) est/sont soumis(e) à une vibration.

9. Procédé selon l'une des revendications précédentes, **caractérisé en ce que** le chauffage des particules de granulés (9) est effectué au moyen d'un dispositif de chauffage à résistance (8) entourant le tube rotatif (6).

10. Procédé selon l'une quelconque des revendications précédentes, **caractérisé en ce que** le tube rotatif (6) est constitué d'une substance qui augmente en même temps la viscosité du verre de quartz, de préférence du Al₂O₃, ZrO₂ ou Si₃N₄.

11. Procédé selon la revendication 10, **caractérisé en ce que** la substance présente une teneur en alcali inférieure à 0,5%.

12. Procédé selon la revendication 10 ou 11, **caractérisé en ce que** la paroi intérieure de tube rotatif se compose d'Al₂O₃ produit synthétiquement.

13. Procédé selon l'une quelconque des revendications 10 à 12, **caractérisé en ce qu'**en utilisant un tube rotatif (6) contenant du Al₂O₃, il est produit un dopage de Al₂O₃ du granulé de verre de quartz (15) compris entre 1 à 20 ppm en poids

14. Procédé selon l'une quelconque des revendications précédentes, **caractérisé en ce que** le granulé de SiO₂ (9) est soumis avant la vitrification à une purification par chauffage dans une atmosphère contenant un halogène, et que la purification du granulé de SiO₂ (9) s'effectue dans un second four rotatif.

15. Procédé selon la revendication 14, **caractérisé en ce que** le second four rotatif est utilisé pour le séchage et la purification du granulé de SiO₂ (9) et, vu dans la direction de l'axe central (7), est divisé en zones, comportant une zone de séchage, et une zone de purification, des zones adjacentes étant divisées par des disques de séparation munis d'ouvertures ou des pièges à labyrinthe.

16. Procédé selon la revendication 14 ou 15, **caractérisé en ce que** la purification s'effectue dans le tube rotatif sous une atmosphère contenant du chlore à une température comprise entre 900 à 1250°C.
